# EUROPÄISCHE PATENTANMELDUNG

(11) **EP 0 535 292 A2**
(43) Veröffentlichungstag der Anmeldung: **07.04.1993**
(21) Anmeldenummer: 92100221.8
(22) Anmeldetag: 09.01.1992
(51) Int. Cl.: B23Q 3/10

(54) **Anbau- und Abschlussplatte für Systeme zum Aufbau von Vorrichtungen zum Aufspannen von Werkstücken**

(30) Priorität: 04.10.1991 DE 4132909
(71) Anmelder: Horst Witte Entwicklungs- und Vertriebs-KG, D-21354 Bleckede (DE)
(72) Erfinder: Witte, Horst, W-2122 Bleckede/OT Radegast (DE)
(74) Vertreter: von Raffay, Vincenz, Dipl.-Ing.

(57) **Zusammenfassung**

Die Anbau- und Abschlußplatte ist für sog. Vorrichtungsbaukästen einsetzbar, die durch Paßbohrungen (5) bestimmte Raster aufweisen. Die Anbau- oder Abschlußplatte (3) bildet das "letzte" Teil des Aufspannsystems, d.h. sie wird unmittelbar mit dem Werkstück verbunden und stellt somit eine "verlorene" Platte dar, die durch Bearbeiten dem Werkstück angepaßt werden kann. Hierdurch ist eine definierte und reproduzierbare Aufspannung gleicher Werkstücke schnell und einfach möglich, da diese Platte dann für diese Werkstücke immer zur Verfügung steht. Die Vorsprünge (6) auf der dem Werkstück abgewandten Seite sind dem durch die Paßbohrungen (5) gebildeten Rastersystem angepaßt, so daß eine entsprechende reproduzierbare und genaue Befestigung, auch um 90° gedreht, möglich ist. Durch die Vorsprünge (6) verlaufen die Befestigungsbohrungen für die Anbau- oder Abschlußplatte.

## Beschreibung

Die Erfindung betrifft eine Anbau- oder Abschlußplatte nach dem Oberbegriff des Patentanspruches 1.

Systeme, für die die Anbau- oder Abschlußplatten geeignet sind, sind in der unterschiedlichsten Ausgestaltung, beispielsweise aus der EP-PS 222 147 bekannt. Diese Systeme werden auch als "Vorrichtungsbaukästen" bezeichnet.

Das aus der EP-PS 222 147 bekannte System dient dem Aufspannen der unterschiedlichsten Werkstücke. Auf der Grundplatte werden die Aufnahmeteile je nach den durch das Werkstück bestimmten Gegebenheiten befestigt. Das Werkstück wird dann an dem "letzten" Aufnahmeteil befestigt.

Die Anbau- und Abschlußplatte nach der Erfindung stellt praktisch ein Aufnahmeteil, und zwar das "letzte" Aufnahmeteil dar, an dem das Werkstück unmittelbar befestigt wird.

Die Aufbauten, die mit den bekannten Systemen erzeugt werden, sind kompliziert, da sie viele Einzelteile aufweisen und zum Aufbauen viel Zeit erforderlich ist. Viele Werkstücke müssen trotzdem nach wie vor mit speziell angefertigten Einzweck-Sondervorrichtungen gespannt werden.

Aus der DE-OS 34 02 260 ist eine Anbau- oder Abschlußplatte bekannt, die mit einem Vorrichtungsbaukasten kombinierbar ist, dessen Grundplatte oder Anbauteile in Längsrichtung verlaufende parallele Nuten zur Befestigung der Anbau- oder Anschlußplatte aufweisen. Die Anordnung und Positionierung erfolgt mit Hilfe von Vorsprüngen, die in ihrer Dimensionierung und in ihrem Abstand den entsprechenden Maßen der Nuten angepaßt sind. Die Befestigung selbst erfolgt durch gesonderte Montagebohrungen, die auf der Mitte zwischen vier Vorsprüngen angeordnet sind. Aus diesem Grunde müssen in der entsprechenden Grundplatte bzw. in dem Aufnahmeteile entsprechende Gewindebohrungen zur Aufnahme der Befestigungsschrauben vorgesehen sein. Hierdurch wird die Vorrichtung verhältnismäßig aufwendig und teuer, da in dem Aufnahmeteil bzw. der Grundplatte besondere Gewindebohrungen, d.h. Befestigungseinrichtungen, vorgesehen werden müssen.

Der Erfindung liegt nun die Aufgabe zugrunde, eine Anbau-und Abschlußplatte der vorstehend genannten Art zu schaffen, die das Aufspannen von Werkstücken, insbesondere reproduzierbar, schneller und einfacher und damit wirtschaftlicher ermöglicht.

Diese Aufgabe wird grundsätzlich durch das Kennzeichen des Patentanspruches 1 gelöst.

Erfindungsgemäß wird also eine "verlorene Platte" geschaffen, die zusätzlich zu dem Vorrichtungsbaukasten zum Einsatz kommt. Die eine Fläche ist beliebig gestaltet und kann in Anpassung an das Werkstück beliebig geformt und zugeschnitten werden. Dies gilt natürlich auch für die Anbau- oder Abschlußplatte selbst. Die einmal dem speziellen Werkstück angepaßte Anbau- und Abschlußplatte steht dann immer für identische Werkstücke zur Verfügung. Die Vorsprünge stellen sicher, daß die Befestigung an dem System, d.h. in den Paßbohrungen des entsprechenden Aufnahmeteils des Vorrichtungsbaukastens, in genau definierter Lage möglich ist. Die Vorsprünge passen genau in die Paßbohrungen, d.h. sie sind in ihren Abmessungen und ihrem Abstand, und damit auch dem vorgegebenen Rastersystem, angepaßt.Der Befestigung der Anbau- und Aufspannplatte dienen die Paßbohrungen, die in den Teilen des Vorrichtungsbaukastens, d.h. in der Grundplatte bzw. in dem Aufnahmeteil, bereits vorhanden sind. Es ist nicht erforderlich an den Teilen des Vorrichtungsbaukastens irgendwelche Veränderungen vorzunehmen, um die Anbau- und Aufspannplatte nach der Erfindung zu befestigen und ihre universelle - auch um 90° gedrehte - Anordnung vorzunehmen. Die Bohrungen zur Befestigung in der Anbau- oder Aufspannplatte verlaufen durch die Mitte der Vorsprünge, so daß die Paßbohrungen in dem entsprechenden Teil des Systems, d.h. des Vorrichtungsbaukastens, zur Befestigung verwendet werden können. Gesonderte Bohrungen sind nicht erforderlich. Die Anbau- oder Aufspannplatte selbst kann sehr schnell an die unterschiedlichsten Werkstückkonturen durch Zuschneiden, z.B. durch eine Bandsäge, angepaßt werden.

Es entsteht eine werkstückspezifische Anbau- oder Abschlußplatte, die mit Konturen, Anschlagkanten, Bohrungen für Anschlagstifte, Gewindebohrungen für Befestigungsschrauben und dergleichen, auf der Werkzeugmaschine selbst versehen werden kann.

Die Befestigungsbohrungen in der Anbau- und Abschlußplatte können entweder erst ausgebildet werden, wenn die eigentliche Befestigung erfolgt, d.h. nur durch die Vorsprünge gebohrt werden, die zur Befestigung ausgewählt sind. Sie können aber auch in sämtlichen Vorsprüngen von vornherein vorgesehen sein. Einzelheiten sind Gegenstand der Unteransprüche 2 bis 6.

Die Vorsprünge, die so ausgebildet sind, daß eine Befestigung auf Umschlag, d.h. um 90° in der Aufspannebene gedreht, möglich ist, können so ausgebildet sein, wie in den Ansprüchen 5 und 6 angegeben, wobei die Anpassung im Abstand und in der Dimensionierung an die Paßbohrungen des Systems vorhanden sein muß.

Im folgenden wird die Erfindung unter Hinweis auf die Zeichnung anhand verschiedener Ausführungsbeispiele näher erläutert.

Es zeigt:
- Fig. 1: eine perspektivische Ansicht einer Anbau- oder Abschlußplatte nach der Erfindung, befestigt auf einem System mit Bohrungen;
- Fig. 2: eine perspektivische Ansicht im wesentlichen der dem Werkstück abgewandten Fläche einer Ausführungsform einer Anbau- oder Abschlußplatte nach der Erfindung;
- Fig. 3: eine Einzelheit einer Ausführungsform eines Vorsprunges;
- Fig. 4: eine der Fig. 3 entsprechende Einzelheit, jedoch einer anderen Ausführungsform eines Vorsprunges;
- Fig. 5: einen Schnitt durch eine Ausführungsform eines Vorsprunges; und
- Fig. 6: einen Schnitt durch eine andere Ausführungsform eines Vorsprunges.

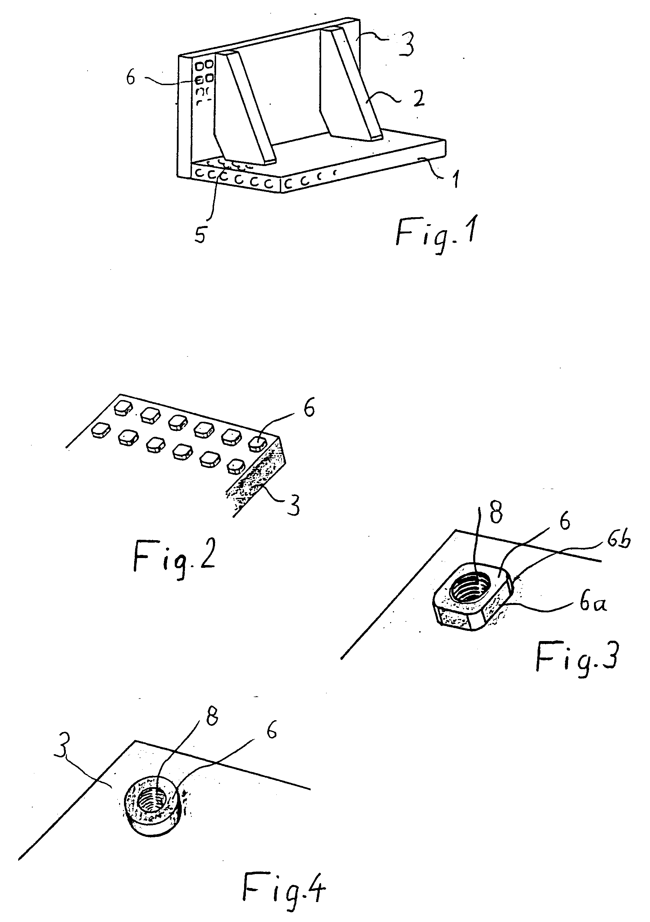

In Fig. 1 ist eine Anbau- oder Abschlußplatte 3 dargestellt, die mit Hilfe einer herkömmlichen Grundplatte 1 und zwei Aufnahmeteilen 2, die in diesem Falle Haltewinkel sind, befestigt ist. Die auf der Anbau- oder Abschlußplatte 3 auf der im wesentlichen sichtbar und dem Werkstück abgekehrten Seite in regelmäßigen Abständen angebrachten Vorsprünge 6 korrespondieren mit den Paßbohrungen 5 in der Grundplatte 1 und mit den entsprechenden Paßbohrungen, die auch in den Aufnahmeteilen, d.h. in den Haltewinkeln, vorgesehen sind. Auf diese Weise kann die Anbau- oder Abschlußplatte 3 reproduzierbar an den Haltewinkeln 2 befestigt werden. Dieses geschieht durch Schrauben, die nicht gezeigt sind. Die Anbau- oder Abschlußplatte 3 läßt sich an ihrer dem Werkstück zugekehrten Aufspannfläche leicht bearbeiten, so daß eine große Genauigkeit sichergestellt wird, die sonst bei Vorrichtungsbaukästen nicht möglich ist.

In Fig. 2 ist noch einmal ein Teil der dem Werkstück abgekehrten Fläche einer Anbau- oder Abschlußplatte dargestellt. Es ist erkennbar, daß die Vorsprünge 6 so gestaltet sind, wie im einzelnen in Fig. 3 dargestellt, d.h. aus einer ursprünglich runden Querschnittsform entstand eine abgeflachte, mit vier Seitenflächen 6a, die praktisch ein Quadrat bilden.

Es ist in jedem Fall eine um 90° in der Aufspannebene gedrehte Befestigung möglich.

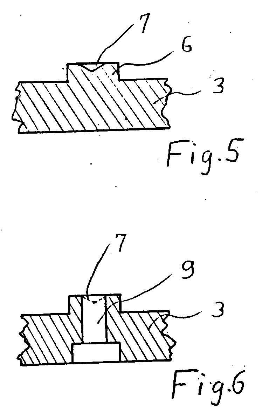

Es ist nun möglich, die Vorsprünge mit Ansenkungen 7 (Fig. 5), Durchgangsbohrungen 9 (Fig. 6) oder Gewindebohrungen 8 (Fig.4) zu versehen. Durch die Bohrungen erfolgt die Befestigung mit Hilfe der Schrauben. Die Ansenkung 7 dient der Zentrierung. Diese Zentrierung erleichtert das Bohren an den später vorzusehenden Stellen zum Anschrauben mit Hilfe der Durchgangs- oder Gewindebohrungen, so wie es gestrichelt in Fig. 6 angedeutet ist. Die Befestigungsbohrungen sind immer in der Mitte (Zentrum) der Fläche des jeweiligen Vorsprungs 6 vorgesehen.

## Patentansprüche

**1.** Anbau- und Abschlußplatte für Systeme zum Aufbau von Vorrichtungen zum Aufspannen von Werkstücken auf Werkzeugmaschinentischen in definierter und reproduzierbarer Lage, mit einer auf dem Maschinentisch aufsetzbaren Grundplatte (1), die in regelmäßigen Koordinatenabständen angeordnete Paßbohrungen (5) zur Befestigung von Aufnahmeteilen mit Hilfe von Schrauben aufweist, wobei die Aufnahmeteile mit in den gleichen Koordinatenabständen wie die Grundplatte angeordneten Paßbohrungen (5) für die Schrauben versehen sind, dadurch gekennzeichnet, daß die Aufspannfläche für das Werkstück beliebig, vorzugsweise plan, ausgebildet ist,
daß auf der anderen, dem Werkstück abgelegenen Fläche Vorsprünge (6) vorgesehen sind, die in ihrem Abstand und in ihren Abmessungen den Paßbohrungen (5) derart angepaßt sind, daß eine definierte, reproduzierbare und um 90° in der Aufspannebene drehbare Positionierung zu dem entsprechenden Teil des Systems gegeben ist, und
daß im Zentrum jedes Vorsprungs (6) eine Befestigungsbohrung (8 oder 9) herstellbar bzw. bereits vorgesehen ist.

**2.** Anbau- und Abschlußplatte nach Anspruch 1, dadurch gekennzeichnet, daß zur Herstellung (Zentrierung) der Paßbohrung (8 oder 9) eine Ansenkung (7) vorgesehen ist.

**3.** Anbau- und Abschlußplatte nach Anspruch 1 oder 2, dadurch gekennzeichnet, daß die Befestigungsbohrung eine Gewindebohrung (8) ist.

**4.** Anbau- und Abschlußplatte nach Anspruch 1 oder 2, dadurch gekennzeichnet, daß die Befestigungsbohrung eine Durchgangsbohrung (9) ist.

**5.** Anbau- und Abschlußplatte nach einem oder mehreren der vorstehenden Ansprüche, dadurch gekennzeichnet, daß die Vorsprünge (6) einen runden Querschnitt aufweisen (Fig. 4).

**6.** Anbau- und Abschlußplatte nach einem oder mehreren der vorstehenden Ansprüche 1 bis 4, dadurch gekennzeichnet, daß die Vorsprünge (6) an vier senkrecht aufeinanderstehenden Seiten (6a) zur Bildung eines Quadrats abgeflacht sind.

**4.** Anbau- oder Abschlußplatte nach einem oder mehreren der vorstehenden Ansprüche, dadurch gekennzeichnet, daß in der dem Werkstück abgewandten Fläche jedes Vorsprunges (6) eine Ansenkung (7) zur Zentrierung vorgesehen ist (Fig. 5).

**5.** Anbau- oder Abschlußplatte nach einem der vorstehenden Ansprüche 1 bis 3, dadurch gekennzeichnet, daß in jedem Vorsprung (6) eine Gewindebohrung (8) vorgesehen ist (Fig. 3).

**6.** Anbau- oder Abschlußplatte nach einem oder mehreren der vorstehenden Ansprüche 1 bis 3, dadurch gekennzeichnet, daß in jedem Vorsprung (6) eine Durchgangsbohrung (9) vorgesehen ist (Fig. 6).
